Europäisches Patentamt

European Patent Office

Office européen des brevets

(19)

(11) **EP 1 228 838 B1**

(12) **EUROPÄISCHE PATENTSCHRIFT**

(45) Veröffentlichungstag und Bekanntmachung des Hinweises auf die Patenterteilung:
**20.07.2005 Patentblatt 2005/29**

(51) Int Cl.⁷: **B23Q 1/54**, B23Q 1/56, B23Q 3/18, B25J 17/02

(21) Anmeldenummer: **02450023.3**

(22) Anmeldetag: **04.02.2002**

(54) **Kinematische Vorrichtung zum Bewegen eines Trägers**

Kinematical device for moving a carrier

Dispositif cinématique pour manoeuvrer un support

(84) Benannte Vertragsstaaten:
**AT BE CH CY DE DK ES FI FR GB GR IE IT LI LU MC NL PT SE TR**

(30) Priorität: **06.02.2001 AT 2001188**

(43) Veröffentlichungstag der Anmeldung:
**07.08.2002 Patentblatt 2002/32**

(73) Patentinhaber: **Bleicher, Fritz, Dipl.-Ing. Dr.techn.
1140 Wien (AT)**

(72) Erfinder: **Bleicher, Fritz, Dipl.-Ing. Dr.techn.
1140 Wien (AT)**

(74) Vertreter: **Beer, Manfred, Dipl.-Ing. et al
Lindengasse 8
1070 Wien (AT)**

(56) Entgegenhaltungen:
DE-A- 19 640 769     DE-A- 19 850 899
DE-A- 19 924 823     FR-A- 2 779 080
US-A- 6 157 157

**Beschreibung**

Die Erfindung betrifft eine Kinematik mit einer Basis, einem beweglichen Träger fur Werkzeuge oder Werkstücke, kinematischen Gliedern zwischen der Basis und dem beweglichen Träger und mit Antrieben für wenigstens einen Teil der kinematischen Glieder.

Im Werkzeugmaschinenbau existieren zur Zeit im wesentlichen zwei Konzepte für Kinematiken. Diese sind zum einen serielle Konzepte, d.h. die einzelnen Vorschubachsen sind jeweils aufeinander aufbauend angeordnet. Dies bedeutet, daß ein Antrieb andere Antriebe tragen muß. Bei sechsachsigen Knickarmroboternmuß beispielsweise der Antrieb der ersten Achse die Antriebe der anderen fünf Achsen tragen. Die Ausnahme stellt einzig die letzte NC-Achse der kinematischen Kette dar, die keinen weiteren Antrieb tragen muß. Besonders für die Hochgeschwindigkeitsbearbeitung, wo Maschinen mit hoher Dynamik erforderlich sind, ist ein derartiges Maschinenkonzept nachteilig. Ein weiteres Charakteristikum derartiger Konzepte ist, daß Maschinengestellteile durch Biegung verformt werden. In Abhängigkeit der jeweiligen Achspositionen ergeben sich daraus unterschiedliche Werte fur die Steifigkeit, die Eigenfrequenz oder das Beschleunigungsvermogen, welche haufig nicht den gesteigerten Anforderungen der Anwender gerecht werden.

Daneben existieren auch sogenannte parallele Maschinenkinematiken (Tripode- oder Hexapode-Maschinen), die sich dadurch auszeichnen, daß mehrere kinematische Ketten bzw. Glieder parallel an eine zu bewegende Plattform (Träger für Werktrager oder Werkstucke) angebaut sind und diese mit dem ortsfesten Maschinengestell (Basis) verbinden. Eines der bekanntesten Beispiele für eine sechsachsige Parallelkinematik ist der Flugsimulator. Auch bei diesen parallelen Kinematiken bestehen die im Zusammenhang mit den seriellen Kinematiken beschriebenen Inhomogenitäten in Form von unterschiedlichen Werten für die Steifigkeit, die Eigenfrequenz oder das Beschleunigungsvermögen in Abhängigkeit der jeweiligen Achspositionen.

Es gab daher Ansatze, diese Schwäche dadurch zu beheben, daß man eine parallele Kinematik unter Vorspannung versetzt, indem man die Anzahl der kinematischen Glieder und deren Antriebe großer als die Zahl der Freiheitsgrade des Trägers bestimmt. Beispielhaft wird auf die DE 198 50 899 A1, Fig. 4 verwiesen, in der eine sogenannte λ-Scherenkinematik fur zwei Freiheitsgrade mit vier Antrieben ausgestattet ist. Dies ermöglicht es, Vorspannungskrafte in den kinematischen Gliedern und Gelenken aufzubringen, indem man die Antriebe bis zu einem gewissen, frei definierbaren Grad "gegeneinander" wirken läßt. Die Vorspannungskrafte können somit eine Verbesserung der Steifigkeitscharakteristik bewirken.

Nachteilig bei derartigen Konzepten ist allerdings weiterhin, daß einzelne kinematische Glieder nach wie vor einer Biegebelastung unterliegen, welche sich negativ auf die gesamte Systemsteifigkeit auswirkt.

Der Erfindung liegt daher die Aufgabe zugrunde, das Steifigkeitsverhalten derartiger Kinematiken weiter zu verbessern.

Gelöst wird diese Aufgabe mit einer Kinematik mit den Merkmalen des Anspruches 1.

Bei der Erfindung wird unter Beibehaltung der mechanischen Überbestimmtheit, d.h. einer größeren Anzahl von Antrieben als Freiheitsgraden, jedes kinematische Glied, das über einen eigenen Antrieb verfügt, unmittelbar sowohl mit der Basis, als auch mit dem Träger gelenkig verbunden. Dadurch besteht die Möglichkeit, die kinematischen Glieder mit einem Antrieb nur mit Zug- oder Druckkräften zu belasten, wodurch sich das Steifigkeitsverhalten der Kinematik erheblich verbessern laßt. So ermöglichen permanent auf Zug belastete bzw. vorgespannte Bauteile z.B. den optimalen Einsatz von Kohlefaser-(CFK)-Bauteilen, wodurch der Leichtbau begünstigt wird, da CFK bei einem mit Stahl vergleichbaren E-Modul nur etwa ein Viertel der Dichte aufweist.

Da die Vorspannungskräfte wie erwähnt frei definierbar sind, kann die Vorspannung auch in Abhängigkeit des Arbeitseinsatzes der Plattform gewählt werden, ohne daß durch die erhöhte Vorspannung eine erhöhte Deformation des gesamten Systems bewirkt wird. Bei hohen Anforderungen an das Eigenverhalten oder an die Positioniergenauigkeit können daher die Vorspannungwerte z.B. kurzfristig erhöht werden.

Bei der Erfindung ist wesentlich, daß jedenfalls die kinematischen Glieder, die über einen eigenen Antrieb verfügen, unmittelbar sowohl an der Basis als auch am Träger angreifen, wobei weitere kinematische Glieder, die z.B. einer Parallelführung des Trägers dienen und somit eine Achse sperren, nicht unmittelbar an der Basis und am Träger angreifen müssen. Es hat sich aber als vorteilhaft erwiesen, wenn jedes kinematische Glied unmittelbar sowohl an der Basis als auch am Träger angreift.

Bei der Erfindung ist das Verhältnis der Anzahl der kinematischen Glieder mit einem eigenen Antrieb zur Anzahl der Freiheitsgrade des Trägers gleich oder größer 2.

Weitere bevorzugte Ausführungsformen der Erfindung sind Gegenstand der übrigen Unteransprüche.

Nachfolgend werden bevorzugte Ausführungsbeispiele der Erfindung mit Bezug auf die angeschlossenen Zeichnungen erläutert.

Es zeigt:

Fig. 1 eine erste Ausführungsform der Erfindung in Form einer sogenannten Doppelscherenkinematik;

Fig. 2 eine zweite Kinematik in einer abgeänderten Ausführungsform;

Fig. 3 eine nicht erfindungsgemäße Ausführungsform einer Scherenkinematik;

Fig. 4 eine Ausführungsform einer nicht erfindungsgemäßen Kinematik mit einer Bewegbarkeit des Trägers im Raum;

Fig. 5 eine Prinziplösung eines Bearbeitungszentrums gemäß der Erfindung; und

Fig. 6 eine Schrägbettlöung eines Bearbeitungszentrums unter Einsatz der vorliegenden Erfindung.

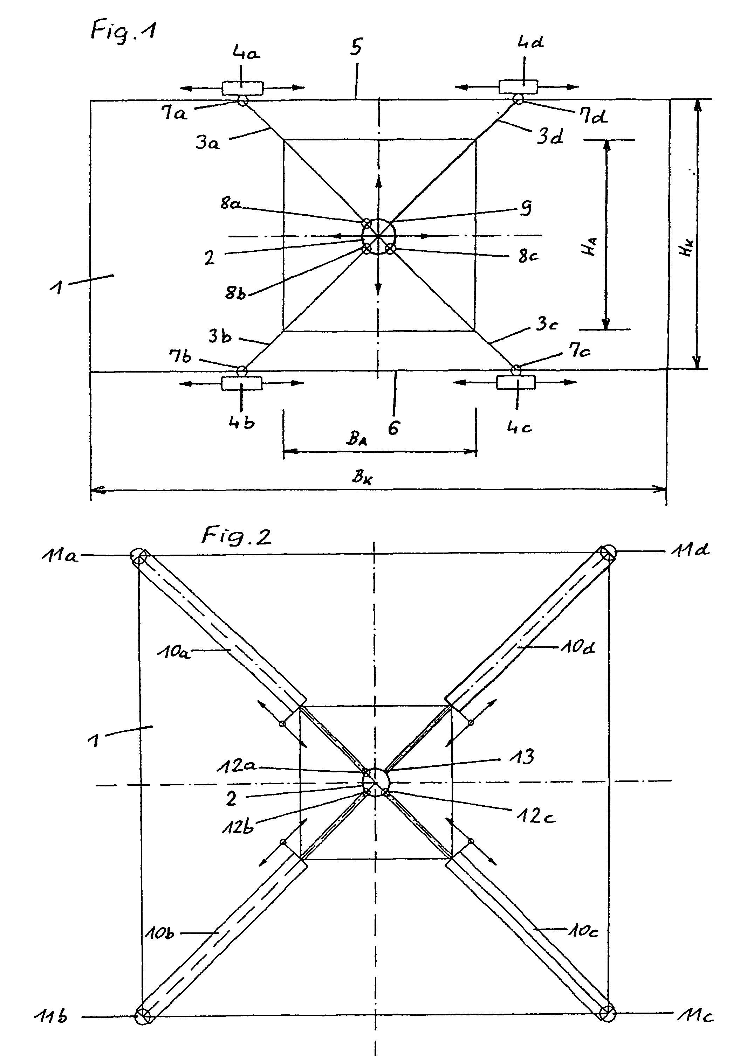

In Fig. 1 ist eine erste Ausführungsform der Erfindung schematisch dargestellt, die im wesentlichen aus einer Basis 1, einem Träger 2, vier kinematischen Gliedern 3a bis 3d und vier Antrieben 4a bis 4d besteht. Die Antriebe 4a und 4d sind entlang einer Führung 5 und die Antriebe 4b und 4c entlang einer Führung 6 verschiebbar.

Die kinematischen Glieder 3a bis 3d sind nicht längenveranderbare Stäbe, die mittels Gelenken 7a bis 7d mit einem Freiheitsgrad mit den Antrieben 4a bis 4d verbunden sind. Die Glieder 3a, 3b und 3c sind des weiteren über Gelenke 8a, 8b und 8c mit einem Freiheitsgrad mit dem Träger 2 verbunden, wogegen das Glied 3d bei 9 so mit dem Träger 2 verbunden ist, daß der Drehfreiheitsgrad des Trägers 2 gesperrt ist. Es kann sich dabei um eine starre Verbindung zwischen Stab 3d und Träger 2 handeln, allerdings mit dem Nachteil, daß durch die starre Verbindung eine Biegebeanspruchung in den Stab 3d eingeleitet wurde. Idealerweise wird der Stab 3d daher als Parallelgrammlenker ausgeführt sein, der den Drehfreiheitsgrad in der Bildebene von Fig. 1 ebenfalls sperrt, aber nur Zug- bzw. Druckkräfte in das kinematische Glied 3d einleitet. Im Rahmen dieser Erfindung werden daher auch Baugruppen, wie z.B. Parallellenker mit zwei parallelen Stäben, die mit einem gemeinsamen Antrieb ausgestattet sind und sich weitgehend wie ein einziger Teil verhalten, als ein einzelnes kinematisches Glied betrachtet.

Im in Fig. 1 dargestellten Ausführungsbeispiel betragt das Verhältbis k/f, d.h. das Verhältnis der kinematischen Glieder 3a bis 3d mit einem Antrieb 4a bis 4d zur Anzahl der Freiheitsgrade des Trägers (nämlich zwei) genau zwei. Durch Verfahren der Antriebe 4a bis 4d entlang der Führungen 5 und 6 kann der Träger 2 in der Bildebene bewegt werden wobei sich durch die symmetrische Anordnung ein äußerst homogenes Steifigkeitsverhalten der Kinematik über den gesamten Arbeitsraum ergibt, dessen Breite in Fig. 1 mit $B_A$ und dessen Höhe mit $H_A$ bezeichnet ist. Die erforderliche Gesamtbreite der Kinematik ist in Fig. 1 mit $B_k$ und deren Gesamthöhe mit $H_k$ bezeichnet. Durch die Möglichkeit, die Vorspannung in der Kinematik durch den weitgehend frei wählbaren Grad der Vorspannung variabel an bestimmte Anforderungen anpassen zu können, kann die Homogenität des Steifigkeitsverhaltens im gesamten Arbeitsraum $B_A$-$H_A$ weiter verbessert werden.

Trotz der erforderlichen Verdoppelung der Anzahl der Antriebe 4a bis 4d im Vergleich zum Stand der Technik (für zwei Freiheitsgrade sind nur zwei Antriebe erforderlich) ist eine relativ kostengünstige Umsetzung dieser überdefinierten Antriebslösung realisierbar, da die gewünschte Steifigkeit der Kinematik sonst z.B. über aufwendige Maschinengestellteile erreicht werden müßte, die jedoch aufgrund der hohen Massen keine hohe Dynamik in der Verfahrbewegung erreichen lassen, oder nur mit sehr hohen Kosten zu bewerkstelligen sind. Bei der Erfindung können demgegenüber die bewegten Massen je Antriebskette bzw. -glied auf ein Minimum reduziert werden.

In Fig. 2 ist eine mit Fig. 1 vom Konzept her vergleichbare Lösung dargestellt, wobei in Fig. 2 längenveränderliche kinematische Glieder 10a bis 10d eingesetzt werden, die wiederum mit Gelenken 11a bis 11d mit einem Freiheitsgrad an der Basis 1 gelagert sind. Die kinematischen Glieder 10a, 10b und 10c sind auch in diesem Ausführungsbeispiel wieder über Gelenke 12a, 12b und 12c mit einem Freiheitsgrad mit dem Träger 2 verbunden, wogegen das kinematische Glied 10d bei 13 wieder derart mit dem Träger 2 verbunden ist, daß eine Drehbewegung zwischen dem Träger 2 und dem kinematischen Glied 10d ausgeschlossen ist.

Die erforderlichen Meßwertgeber für die Antriebe können auf den Antriebsmotoren oder aber auch direkte auf den Schlitten angebracht werden (direkte Wegmessung). Für Präzisionslösungen kann ein reduntantes Wegmeßsystem vorgesehen sein, um auch die undefinierten Systemcharakteristika der mechanischen Überbestimmung erfassen zu können (z.B. kathetische Zweiachsenmessung über Meßkreuztisch oder über Meßgestange auch in Teleskopform).

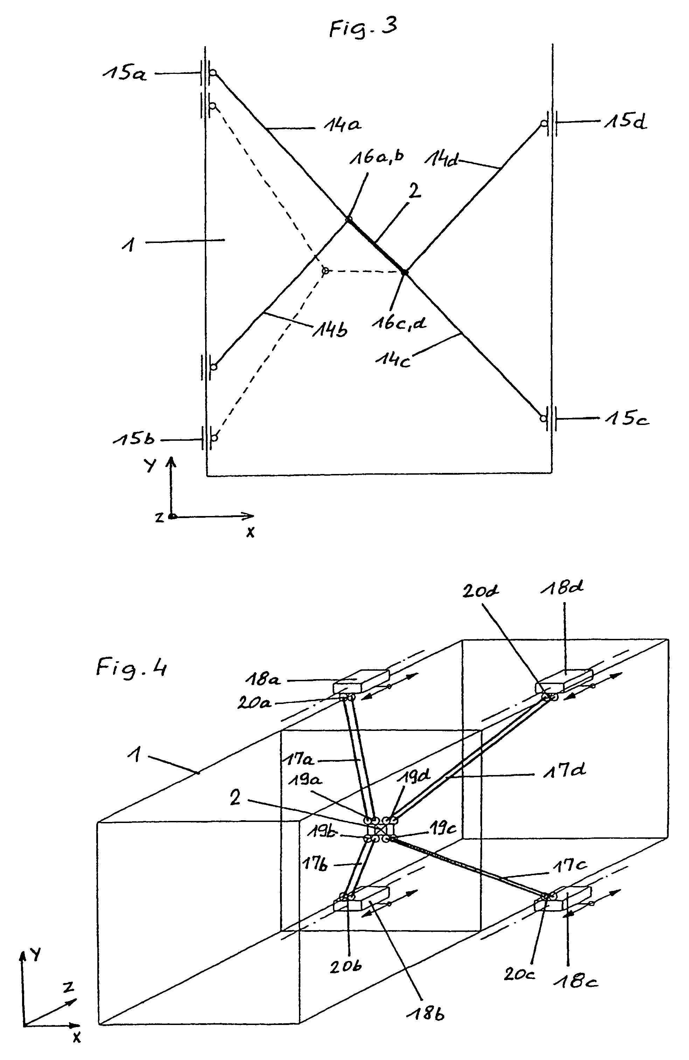

In Fig. 3 ist eine nicht erfindungsgemäße Ausführungsform dargestellt, in der der Träger 2 drei Freiheitsgrade in einer Ebene aufweist, nämlich die Bewegung in der X- und Y-Achse sowie die Drehung um die Z-Achse.

Bei der Ausführungsform von Fig. 3 sind vier nicht längenveränderliche, kinematische Glieder 14a bis 14d mittels Antrieben 15a bis 15d an der Basis 1 verschiebbar. Die Stäbe 14a und 14b sind über Gelenke 16a und 16b mit dem Träger 2 verbunden, die in der Z-Achse zueinander fluchten. In entsprechender Weise sind die Stäbe 14c und 14d mit Gelenken 16c und 16d mit dem Träger 2 verbunden, die ebenfalls in einer gemeinsamen Z-Achse liegen. Eine Stellung der Kinematik ist in durchgehenden Linien gezeichnet, eine zweite Stellung strichliert.

In der Ausführungsform gemäß Fig. 3 ist das Verhältnis der Anzahl der kinematischen Glieder 14 mit einem eigenen Antrieb 15 zur Anzahl der Freiheitsgrade des Trägers 2 4/3, wodurch sich wieder eine aktive Verspannungsmoglichkeit für die kinematischen Glieder 14a bis 14d ausschließlich durch Zugkräfte in den kinematischen Gliedern 14a bis 14d ergibt.

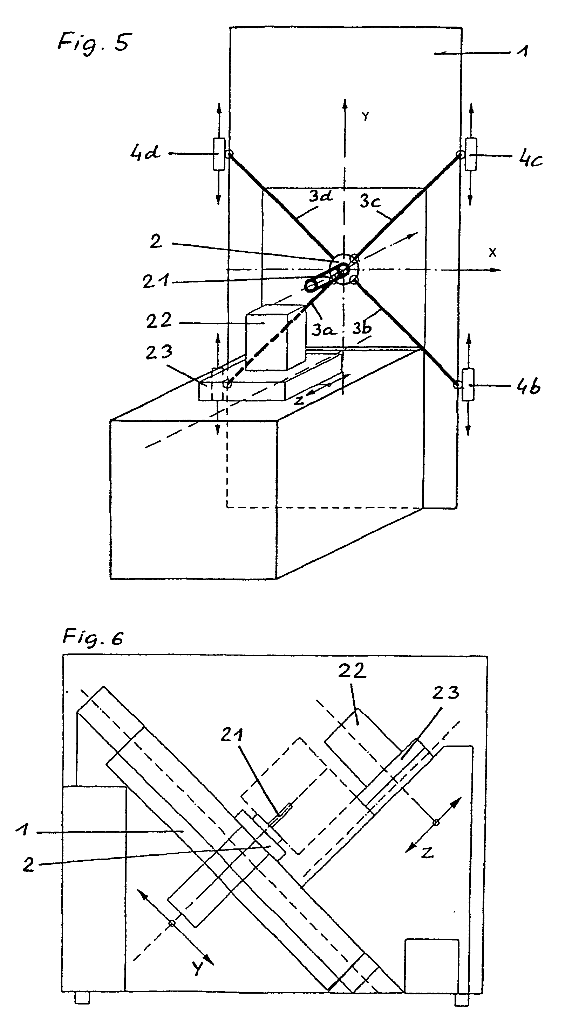

Ein Großteil der Bewegungsaufgaben, insbesondere in der Produktionstechnik erfordert eine Dreiachsbewegung. Die dritte Vorschubachse kann dann z. B. auch am beweglichen Träger 2 angebracht sein. Es ist jedoch auch denkbar, den gesamten Kinematikrahmen bzw. die Basis 1 zu bewegen. Eine weitere Möglichkeit besteht darin, eine externe Zusatzachse zu realisieren, wie später mit Bezug auf Fig. 5 noch beschrieben werden wird.

In Fig. 4 ist eine nicht erfindungsgemäße Ausführungsform dargestellt, bei der der Träger 2 in drei Freiheitsgraden, nämlich der X-, Y- und Z-Achse im Raum beweglich ist. Der Träger 2 ist über vier kinematische Glieder 17a bis 17d mit Antrieben 18a bis 18d verbunden, wobei die Gelenke 19a bis 19d zwischen den Gliedern 17a bis 17d und dem Träger 2 als kardanische Gelenke (zwei Freiheitsgrade) ausgeführt sein können und die Gelenke 20a bis 20d zwischen den Gliedern 17a bis 17d und den Antrieben 18a bis 18d als sphärische Gelenke (drei Freiheitsgrade). Die Kombination aus kardanischen und sphärischen Gelenken verhindert einen Rotationsfreiheitsgrad, der als Parallel-Lenker ausgeführten kinematischen Glieder 17a bis 17d um die eigene Achse und geben jeweils sechs Freiheitsgrade am Träger 2 frei, wobei durch die Summe bzw. die Anordnung aller kinematischen Glieder 17a bis 17d aber nur drei Freiheitsgrade des Trägers 2 ubrig bleiben.

Bei der in Fig. 4 dargestellten Ausführungsform der Erfindung beträgt das Verhältnis der Anzahl der kinematischen Glieder 17a bis 17d mit einem eigenen Antrieb 18a bis 18d zur Anzahl der Freiheitsgrade des Trägers 2 wiederum 4/3, wobei eine aktive Vorspannungsmöglichkeit der Kinematik bei gleichzeitiger Verhinderung von Biegemomenten in den kinematischen Gliedern und somit eine sehr hohe Steifigkeit der gesamten Kinematik ermöglicht wird.

In Fig. 5 ist eine Prinziplösung eines Bearbeitungszentrums unter Verwendung einer Kinematik entsprechend Fig. 1 dargestellt. Am Träger 2 ist beispielsweise eine Werkzeugspindel 21 mit einem entsprechenden Antrieb angeordnet. Ein Werkstück 22 ist demgegenüber auf einem Schlitten 23 befestigt, durch den eine Relativbewegung in der Z-Achse zwischen Werkstuck 22 und Werkzeugspindel 21 realisiert wird.

In Fig. 6 ist schließlich eine Ausführungsform der Erfindung dargestellt, bei der die Basis 1 mit einer Kinematik, wie z.B. mit Bezug auf Fig. 5 bzw. Fig. 1 beschrieben, in einem Winkel von 45° zur Horizontalen angeordnet ist, um den Platzbedarf der Kinematik zu optimieren. Demgemaß ist auch der Schlitten 23 mit dem Werkstuck 22, der in Richtung der Z-Achse verschiebbar ist, um den gleichen Winkel geneigt. Um die Baubreite der Maschine möglichst gering zu halten, können die rotatorischen Gelenke am beweglichen Träger 2 möglichst nahe der X-Achse durch den Träger 2 angeordnet werden.

**Patentansprüche**

1. Kinematik mit einer Basis (1), einem beweglichen Träger (2) fur Werkzeuge oder Werkstucke (22), kinematischen Gliedern (3, 10, 14, 17) zwischen der Basis (1) und dem beweglichen Träger (2) und mit Antrieben (4, 15, 18) für wenigstens einen Teil der kinematischen Glieder (3, 10, 14, 17), wobei jedes kinematische Glied (3, 10, 14, 17), das über einen eigenen Antrieb (4, 15, 18) verfugt, unmittelbar sowohl an der Basis (1) als auch am Träger (2) angreift **dadurch gekennzeichnet, daß** der Träger (2) nur in einer Ebene beweglich ist und daß das Verhaltnis $\frac{k}{f}$ gleich oder großer 2 ist, wobei

   k = Anzahl der kinematischen Glieder (3, 10, 14, 17) mit einem eigenen Antrieb (4, 15, 18) und
   f = Anzahl der Freiheitsgrade des Trägers (2)

   ist.

2. Kinematik nach Anspruch 1, **dadurch gekennzeichnet, daß** jedes kinematisch Glied (3, 10, 14, 17) unmittelbar sowohl an der Basis (1) als auch am Träger (2) angreift.

3. Kinematik nach Anspruch 1, **dadurch gekennzeichnet, daß** der Träger (2) mittels vier kinematischer Glieder (3, 10, 14, 17) mit der Basis (1) verbunden ist, und daß jedes kinematische Glied (3, 10, 14, 17) mit einem Antrieb (4, 15, 18) ausgestattet ist.

4. Kinematik nach Anspruch 3, **dadurch gekennzeichnet, daß** drei kinematische Glieder (3a bis 3c; 10a bis 10c) gelenkig mit dem Träger (2) verbunden sind und daß ein kinematisches Glied (3d; 10d) fest mit dem Träger (2) verbunden ist.

5. Kinematik nach Anspruch 3, **dadurch gekennzeichnet, daß** die kinematischen Glieder (14a bis 14d) gelenkig mit dem Träger (2) verbunden sind, und daß je zwei der Gelenke (14a, 14b; 14c, 14d) auf einer normal zur Ebene liegenden Achse liegen.

6. Kinematik nach einem der Anspruche 1 bis 5, **dadurch gekennzeichnet, daß** die kinematischen Glieder (3, 14, 17) aus Stäben konstanter Lange bestehen und mit an der Basis (1) angeordneten Antrieben (4, 15, 18) verschiebbar sind.

7. Kinämatik nach einem der Anspruche 1 bis 5, **dadurch gekennzeichnet, daß** die kinematischen Glieder (10) aus langenveränderlichen Stäben mit integrierten Antrieben bestehen.

8. Kinematik nach Anspruch 7, **dadurch gekennzeichnet, daß** die Antriebe (4, 15, 18) Linearantriebe sind.

9. Kinematik nach Anspruch 7, **dadurch gekennzeichnet, daß** die Antriebe (4, 15, 18) Kugelgewindetriebe sind.

## Claims

1. Kinematic device having a base (1), a moveable carrier (2) for tools or workpieces (22), kinematic members (3, 10, 14, 17) between the base (1) and the moveable carrier (2) and having drives (4, 15, 18) for at least one part of the kinematic members (3, 10, 14, 17), each kinematic member (3, 10, 14, 17), which has a separate drive (4, 15, 18), engaging directly both on the base (1) and on the carrier (2), **characterised in that** the carrier (2) is moveable only in one plane and **in that** the ratio

$$\frac{k}{f}$$

is equal to or greater than 2, wherein

k =  number of kinematic members (3, 10, 14, 17) with a separate drive (4, 15, 18) and
f =  number of degrees of freedom of the carrier (2).

2. Kinematic device according to claim 1, **characterised in that** each kinematic member (3, 10, 14, 17) engages directly both on the base (1) and on the carrier (2).

3. Kinematic device according to claim 1, **characterised in that** the carrier (2) is connected by means of four kinematic members (3, 10, 14, 17) to the base (1), and **in that** each kinematic member (3, 10, 14, 17) is equipped with a drive (4, 15, 18).

4. Kinematic device according to claim 3, **characterised in that** three kinematic members (3a to 3c; 10a to 10c) are connected in an articulated manner to the carrier (2), and **in that** one kinematic member (3d; 10d) is connected rigidly to the carrier (2).

5. Kinematic device according to claim 3, **characterised in that** the kinematic members (14a to 14d) are connected in an articulated manner to the carrier (2), and **in that** two of the articulations respectively (14a, 14b; 14c, 14d) are situated on an axis which is normal to the plane.

6. Kinematic device according to one of the claims 1 to 5, **characterised in that** the kinematic members (3, 14, 17) comprise rods of constant length and are displaceable by drives (4, 15, 18) which are disposed on the base (1).

7. Kinematic device according to one of the claims 1 to 5, **characterised in that** the kinematic members (10) comprise rods which are adjustable in length, with integrated drives.

8. Kinematic device according to claim 7, **characterised in that** the drives (4, 15, 18) are linear drives.

9. Kinematic device according to claim 7, **characterised in that** the drives (4, 15, 18) are ball screws.

## Revendications

1. Dispositif cinématique avec une base (1), un support mobile (2) pour des outils ou des pièces à usiner (22), des éléments cinématiques (3, 10, 14, 17) entre la base (1) et le support mobile (2) et avec des entraînements (4, 15, 18) pour au moins une partie des éléments cinématiques (3, 10, 14, 17), chaque élément cinématique (3, 10, 14,17) qui dispose d'un propre entraînement (4, 15, 18) agissant directement non seulement sur la base (1), mais aussi sur le support (2), **caractérisé en ce que** le support (2) n'est mobile que dans un plan et **en ce que** le rapport $\frac{k}{f}$ est égal ou supérieur à 2,

k étant  le nombre des éléments cinématiques (3, 10, 14, 17) avec un propre entraînement (4, 15, 18) et
f étant  le nombre des degrés de liberté du support (2).

2. Dispositif cinématique selon la revendication 1, **caractérisé en ce que** chaque élément cinématique (3, 10, 14, 17) agit directement non seulement sur la base (1), mais aussi sur le support (2).

3. Dispositif cinématique selon la revendication 1, **caractérisé en ce que** le support (2) est relié à la base (1) au moyen de quatre éléments cinématiques (3, 10, 14, 17) et **en ce que** chaque élément cinématique (3, 10, 14, 17) est équipé d'un entraînement (4, 15, 18).

4. Dispositif cinématique selon la revendication 3, **caractérisé en ce que** trois éléments cinématiques (3a à 3c; 10a à 10c) sont reliés de manière articulée au support (2) et **en ce qu'**un élément cinématique (3d; 10d) est relié rigidement au support (2).

5. Dispositif cinématique selon la revendication 3, caracténsé en ce que les éléments cinématiques (14a à 14d) sont reliés de manière articulée sur le support (2) et en ce que respectivement deux des articulations (14a, 14b; 14c, 14d) se trouvent sur un axe normal par rapport au plan.

6. Dispositif cinématique selon l'une des revendications 1 à 5, **caractérisé en ce que** les éléments cinématiques (3, 14, 17) se composent de tiges de longueur constante et sont déplaçables au moyen d'entraînements (4, 15, 18) situés à la base (1).

7. Dispositif cinématique selon l'une des revendications 1 à 5, **caractérisé en ce que** les éléments cinématiques (10) se composent de tiges variables en longueur avec des entraînements intégrés.

8. Dispositif cinématique selon la revendication 7, **caractérisé en ce que** les entraînements (4, 15, 18) sont des entraînements linéaires.

9. Dispositif cinématique selon la revendication 7, **caractérisé en ce que** les entraînements (4, 15, 18) sont des vis d'enchaînement à billes.

**Fig.1**

**Fig.2**

Fig. 3

Fig. 4

Fig. 5

Fig. 6